# EUROPÄISCHE PATENTSCHRIFT

(11) **EP 2 987 611 B1**
(45) Veröffentlichungstag und Bekanntmachung des Hinweises auf die Patenterteilung: **27.09.2017**
(21) Anmeldenummer: 14181659.5
(22) Anmeldetag: 20.08.2014
(51) Int. Cl.: B29C 49/46, B29C 49/06, B29C 49/12, B29C 49/58

(54) **Formfüllmaschine und Verfahren zum Reinigen einer Formfüllmaschine**
Blow moulding and filling machine and method for cleaning a blow moulding and filling machine
Machine de soufflage et de remplissage et procédé de nettoyage d'une machine de soufflage et de remplissage

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE); Laumer, Roland, 93073 Neutraubling (DE)
(74) Vertreter: Grünecker Patent- und Rechtsanwälte PartG mbB

(56) Entgegenhaltungen:
- EP-A2- 2 283 991
- EP-B1- 1 529 620
- DE-A1-102011 110 840

## Beschreibung

Die Erfindung betrifft eine Formfüllmaschine und ein Verfahren zum Reinigen einer Formfüllmaschine.

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist. EP 1 529 620 offenbart ein Reinigungsverfahren und eine Formfüllmaschine, die zum Ausformen von Behältern in Hohlformen durch selektives Einleiten eines Formfluids unter Überdruck in Vorformlinge ausgebildet sind, und die zum Füllen der Behälter in der Hohlform durch selektives Einleiten eines Produkts durch wenigstens eine Zuleitung und eine Fluiddüse ausgebildet sind. Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Aufgabe der vorliegenden Erfindung ist es, bekannte Vorrichtungen und Verfahren zum Ausformen und Füllen von Kunststoffbehältern in vorteilhafter Weise weiterzubilden. Insbesondere soll der für das Herstellen und Füllen der Kunststoffbehälter benötigte apparative und/oder zeitliche Aufwand reduziert werden.

Diese Aufgabe wird mit einer Formfüllmaschine nach Anspruch 1 und einem Verfahren zur Reinigung einer Formfüllmaschine nach Anspruch 13 gelöst. Vorteilhafte Ausführungsformen der Erfindung sind in den Unteransprüchen definiert.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Demnach umfasst die Formfüllmaschine mehrere Behandlungsstationen, die zum Ausformen von Behältern in Hohlformen durch selektives Einleiten eines Formfluids unter Überdruck in Vorformlinge ausgebildet sind, und die zum Füllen der Behälter in der Hohlform durch selektives Einleiten eines Produkts durch wenigstens eine Zuleitung und eine Fluiddüse ausgebildet sind. Erfindungsgemäß lässt sich wenigstens ein strukturelles Element, das eine Funktion beim Ausformen der Behälter hat, zuschalten und/oder bewegen, um ein CIP-Medium unter Durchströmen der Produktleitung und der Fluiddüse weiter zu leiten.

Darunter ist zu verstehen, dass das strukturelle Element beim Reinigen eine andere Funktion erfüllt als beim Ausformen der Behälter. Das strukturelle Element vereinigt in sich zwei unterschiedliche Funktionen, so dass sich beim Reinigen ein ansonsten nötiges zusätzliches strukturelles Element einsparen lässt. Die Funktion beim Ausformen der Behälter ist beispielsweise das Leiten eines Formfluids zum pneumatischen oder hydraulischen Umformen von Vorformlingen zu Behältern, das Ausbilden eines Abschnitts der Hohlform, ein Recken des Vorformlings oder dergleichen. Die Funktion beim Reinigen ist beispielsweise das Sammeln und/oder Weiterleiten, insbesondere Zurückleiten, eines CIP-Mediums, das Bereitstellen und/oder Positionieren einer CIP-Abdeckkappe an einer Fluiddüse der Blasstationen, oder dergleichen.

Dies lässt sich wie folgt vorteilhaft ausgestalten: das strukturelle Element ist ein unteres Formteil der Hohlform, das sich abdichtend gegen die Fluiddüse fahren lässt; im unteren Formteil sind Spülkanäle ausgebildet, durch die das CIP-Medium insbesondere in seitlicher Richtung ausgeleitet werden kann; unterhalb des unteren Formteils ist eine Auffangwanne für das CIP-Medium ausgebildet; das strukturelle Element ist eine an der Behandlungsstation ausgebildete Reckstange, die sich nach oben gegen einen Umlenkmechanismus fahren lässt, um eine CIP-Kappe vor die Fluiddüse zu schwenken, insbesondere mittels eines an der Reckstange und/oder am Umlenkmechanismus angeordneten Mitnehmers; das strukturelle Element ist eine zur Fluidleitung rohrförmig ausgebildete Reckstange; das strukturelle Element ist wenigstens eine Zuleitung für ein kompressibles Formfluid ist, die sich selektiv schaltbar in einen Kreislauf für das CIP-Medium einbeziehen lässt, wobei vorzugsweise ferner ein schaltbarer Bypass zur Umgehung wenigstens eines in der Zuleitung des kompressiblen Fluids ausgebildeten Druckminderers vorhanden ist; das strukturelle Element ist wenigstens eine Spur eines an der Formfüllmaschine ausgebildeten zentralen Medienverteilers, die sich von einer Leitung des Formfluids im Produktionsbetrieb auf eine Leitung des CIP-Mediums umschalten lässt; das strukturelle Element ist eine zur Fluidleitung rohrförmig ausgebildete Hauptwelle der Behandlungsstation; das strukturelle Element ist ein Heißhaltekanal für das Produkt; und/oder das strukturelle Element ist eine Reinraum-Einhausung für die Behandlungsstationen.

Unter einem Reinigen im Sinne der Erfindung ist ein CIP (Cleaning-In-Place) von an der Formfüllmaschine ausgebildeten Produktwegen zu verstehen, die vorzugsweise beim CIP auch entkeimt werden.

Vorzugsweise umfassen die Behandlungsstationen Ventilköpfe mit einem Absperrventil, das zwischen der Fluiddüse und einer Zuleitung für ein kompressibles Formfluid ausgebildet ist. Aggressive CIP-Medien lassen sich somit von empfindlichen Dichtungen für pneumatische Ventile, Druckminderer oder dergleichen fernhalten.

Das erfindungsgemäße Verfahren dient zur Reinigung einer Formfüllmaschine mit mehreren Behandlungsstationen, die zum Ausformen von Behältern in Hohlformen durch selektives Einleiten eines Formfluids unter Überdruck in Vorformlinge ausgebildet sind, und die zum Füllen der Behälter in der Hohlform durch selektives Einleiten eines Produkts durch wenigstens eine Zuleitung und eine Fluiddüse ausgebildet sind. Erfindungsgemäß wird ein durch die Produktleitung und die Fluiddüse strömendes CIP-Medium durch Zuschalten und/oder Bewegen eines strukturellen Elements, das eine Funktion beim Ausformen der Behälter hat, weiter und/oder zurück geleitet wird, insbesondere bei umlaufender Behandlungsstation. Beim CIP (Cleaning-In-Place) lassen sich somit im Produktionsbetrieb verwendete Strukturen, die mit Produkt in Kontakt kommen, wie beispielsweise Leitungen, Ventile, Verteiler, Tanks, Ventilköpfe, Fluiddüsen oder dergleichen bei laufender Maschine unter Verwendung der für den Produktionsbetrieb ausgebildeten Fördermittel auf effiziente und effektive Weise reinigen und/oder entkeimen.

Vorzugsweise wird ein Vorformling oder ein Behälter als CIP-Kappe gegen die Fluiddüse gefahren. Separate CIP-Kappen sind dann entbehrlich.

Vorzugsweise wird das CIP-Medium durch eine für ein kompressibles Formfluid zum Ausformen der Behälter vorgesehene Verteilerspur eines an der Formfüllmaschine ausgebildeten Drehverteilers / Medienverteilers geleitet. Dadurch lässt sich eine separate CIP-Rückführspur einsparen.

Die Vorformlinge bestehen aus einem thermoplastischen Kunststoff, wie beispielsweise PET, PE, PP oder dergleichen, und können auf herkömmliche Weise für das Umformen in einem voran geschalteten Ofen erwärmt werden.

Die Behälter lassen sich prinzipiell auch, zumindest anteilig, durch Einleiten eines inkompressiblen Formfluids ausformen. Insbesondere ein abschließender Teil des Umformprozesses könnte in der Hohlform durch hydraulisches Aufpressen des Vorformlings / Behälters erfolgen, im Gegensatz zu einem pneumatischen Aufblasen durch ein kompressibles Formfluid, wie beispielsweise Pressluft.

Ein ausschließlich hydraulisches Aufpressen des Vorformlings hat den Vorteil, dass eine Druckluftversorgung für die Behandlungsstationen zum Zweck des Ausformens entbehrlich ist. Ein teilweise pneumatisches Aufblasen mit einem kompressiblen Formfluid kann insbesondere für ein anfängliches Vorblasen des Behälters in der Hohlform vorteilhaft sein. Ebenso könnte das kompressible Formfluid Kohlendioxid sein, das nach dem Vorblasen zumindest anteilig im Vorformling / Behälter verbleibt und im anschließend unter Überdruck eingeleiteten inkompressiblen Formfluid in Lösung geht, um das Produkt zu karbonisieren.

Die erfindungsgemäße Formfüllmaschine basiert vorzugsweise auf einem kontinuierlich drehbaren Karussell, an dem mehrere Behandlungsstationen befestigt sind. Vorhanden ist vorzugsweise ferner ein mittels Einlaufstern oder dergleichen angekoppelter Ofen zum Erwärmen der Vorformlinge. Diese könnten allerdings auch direkt von einer angeschlossenen Spritzgussmaschine mit geeigneter Einlauftemperatur bereitgestellt werden. Vorhanden ist vorzugsweise ferner eine Verschließmaschine, die mittels Auslaufstern oder dergleichen angekoppelt oder im Bereich eines Auslaufsterns ausgebildet ist. Allerdings könnten die mit Produkt gefüllten Behälter auch auf dem Karussell umlaufend verschlossen werden.

Bevorzugte Ausführungsformen der erfindungsgemäßen Formfüllmaschine sind in der Zeichnung dargestellt. Es zeigen:
Fig. 1 eine schematische Draufsicht auf die bevorzugte Ausführungsform;
Fig. 2 einen schematischen Längsschnitt durch eine bevorzugte Ausführungsform einer erfindungsgemäßen Behandlungsstation;
Fig. 3 ein Fließschema der Formfüllmaschine mit einem Betätigungsmechanismus für eine CIP-Abdeckkappe;
Fig. 4 ein Fließschema der Formfüllmaschine mit einem als CIP-Abdeckkappe ausgebildeten Teil der Hohlform;
Fig. 5 ein Fließschema der Formfüllmaschine mit einem als CIP-Abdeckkappe wirkenden Behälter;
Fig. 6 ein Fließschema der Formfüllmaschine mit einem als CIP-Abdeckkappe wirkenden Vorformling;
Fig. 7 ein Fließschema der Formfüllmaschine im Produktionsbetrieb;
Fig. 8 ein Fließschema der Formfüllmaschine im CIP-Prozess;
Fig. 9 ein alternatives Fließschema der Formfüllmaschine im CIP-Prozess; und
Fig. 10 Strukturelle Elemente zum Leiten von CIP-Medien.

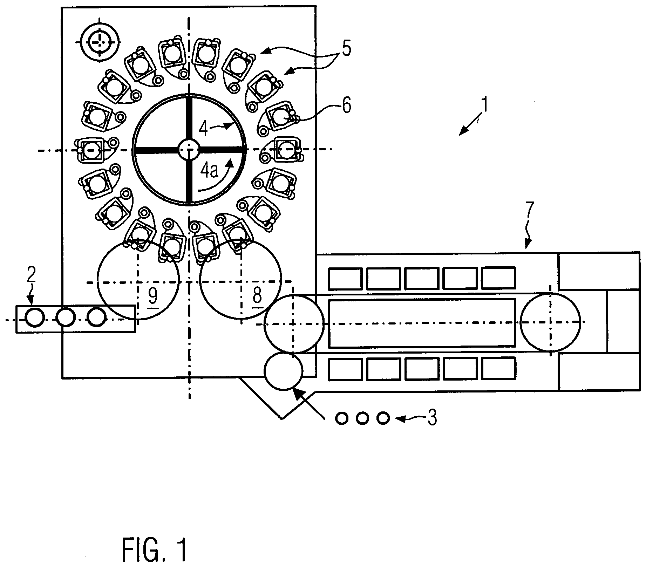

Wie die Fig. 1 erkennen lässt, umfasst die erfindungsgemäße Formfüllmaschine 1 zum Ausformen von Behältern 2 aus Vorformlingen 3 in einer bevorzugten Ausführungsform ein insbesondere mit einer kontinuierlichen Transportbewegung 4a drehbares Karussell 4, an dem mehrere Behandlungsstationen 5 mit Hohlformen 6 zum Ausformen und Füllen der Behälter 2 entlang (eines in der Fig. 1 angedeuteten) Teilkreises in an sich bekannter Weise umlaufen.

Die aus einem thermoplastischen Kunststoff bestehenden Vorformlinge 3 werden eingangs in einem Ofen 7 für das anschließende Ausformen erwärmt und mittels eines Einlaufsterns 8 an die Behandlungsstationen 5 übergeben. Die ausgeformten und gefüllten Behälter 2 werden von einem Auslaufstern 9 an ein Transportmittel oder eine (nicht dargestellte) Verschließmaschine für die Behälter 2 übergeben. Die Behälter 2 könnten ebenso im Transportbereich des Auslaufsterns 9 oder des Karussells 4 verschlossen werden.

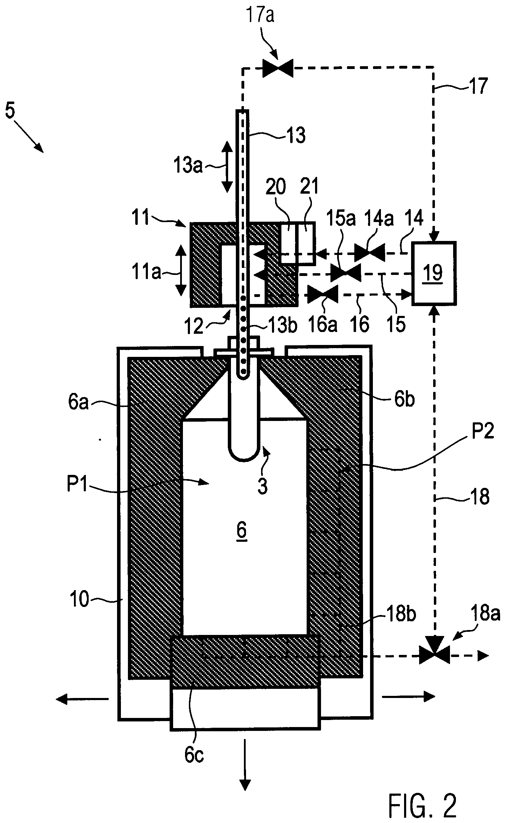

Wie die Fig. 2 erkennen lässt, umfassen die erfindungsgemäßen Behandlungsstationen 5 in einer bevorzugten Ausführungsform je eine Hohlform 6, die aus zueinander beweglichen (siehe Pfeile in der Fig. 2) Formteilen 6a-6c besteht und von einem mehrteiligen Formträger 10 gehalten wird, sowie je einen Ventilkopf 11. Mittels einer (an sich bekannten und daher nicht dargestellten) Hubeinheit lässt sich ein Hub 11a des Ventilkopfs 11 ausführen, um diesen bis auf die Hohlform 6 und einen darin platzierten Vorformling 3 abdichtend abzusenken. Die seitlichen Formteile 6a, 6b sind für das Entformen auseinander schwenkbar und werden auch Formhälften genannt. Das untere Formteil 6c lässt sich nach unten abziehen und wird auch Bodentasse genannt. Die Hohlform 6 wird beispielsweise mittels mechanischer Kurvensteuerung geöffnet / geschlossen. Im Ventilkopf 11 ausgebildete Ventile sind vorzugsweise Membranventile.

Der Hohlform 6 zugewandt ist am Ventilkopf 11 eine Fluiddüse 12 ausgebildet, die einen Fluidtransport in den und aus dem Vorformling 3 ermöglicht. Durch den Ventilkopf 11 ist eine Reckstange 13 pneumatisch und/oder hydraulisch abdichtend geführt. Mittels einer weiteren (an sich bekannten und daher nicht dargestellten) Hubeinheit lässt sich ein Hub 13a der Reckstange 13a bezüglich des Ventilkopfs 11 ausführen, um die Reckstange 13 durch die Fluiddüse 12 in den Vorformling 3 einzuführen und demzufolge beim Umformen mechanisch in Längsrichtung zu recken.

In der Fig. 2 sind beispielhaft Fließwege / Leitungen 14-18 für inkompressible und kompressible Fluide durch gestrichelte Pfeile schematisch angedeutet. Lediglich schematisch dargestellt sind zugehörige, elektrisch und/oder pneumatisch ansteuerbare Ventile 14a-18a zum gesteuerten Öffnen und Schließen der einzelnen Fließwege / Leitungen 14-18. Hierfür eignen sich prinzipiell alle Ventile, die für die jeweiligen Fluide, gegebenenfalls auch für Mittel zur Reinigung und/oder Entkeimung, ausgelegt sind. Die Lage der Ventile 14a-18a in der Fig. 2 dient einer übersichtlichen Darstellung. Insbesondere die mit der Fluiddüse 12 verbundenen Ventile 14a-16a sind vorzugsweise in den Ventilkopf 11 im Sinne eines Ventilblocks integriert.

Vorzugsweise ist wenigstens eine pneumatische Absaugleitung 18 vorhanden, mit der ein zwischen Hohlform 6 und Behälter 2 wirkender externer Unterdruck P2 erzeugt werden kann. Die Absaugleitung 18 ist dann vorzugsweise an ein elektrisch oder pneumatisch gesteuertes Dreiwegeventil 18a und (lediglich schematisch auf einer Seite angedeutete) Entlüftungskanäle 18b angeschlossen.

Das Dreiwegeventil 18a ermöglicht die gezielte Entlüftung der Hohlform 6 beim Expandieren des Vorformlings 3 und die gezielte externe Evakuierung zwischen Hohlform 6 und Behälter 2 beim Füllen mit einem internen Unterdruck P1. Der externe Unterdruck P2 kompensiert den internen Unterdruck P1 wenigstens in einem Maße, dass sich dünne Behälterwände 2 trotz des internen Unterdrucks P1 nicht nach innen verformen. Der Behälter 2 hat demzufolge beim Füllen sein Sollvolumen.

Schematisch angedeutet ist ferner ein für die Behandlungsstationen 5 gemeinsam am Karussell 4 ausgebildeter Medienverteiler 19, beispielweise ein Drehverteiler mit Ringkanälen für Fluide.

Schematisch angedeutet ist ferner ein hydraulischer Kompressor 20 zum individuellen Komprimieren eines inkompressiblen Formfluids für die Behandlungsstation 5. Damit lassen sich beim Ausformen der einzelnen Behälter 2 zeitliche Verläufe des Drucks im inkompressiblen Formfluid gesteuert und reproduzierbar erzeugen.

An dem Ventilkopf 11, dem Kompressor 20 und/oder der Zuleitung 14 kann ferner ein Heizelement 21 für ein inkompressibles Formfluid ausgebildet sein, um dieses individuell an jeder Behandlungsstation 5 zu erwärmen. Damit lassen sich für das Ausformen der einzelnen Behälter 2 zeitliche Verläufe der Temperatur im Formfluid gesteuert und reproduzierbar erzeugen. Außerdem lässt sich das inkompressible Formfluid auf wenigstens eine gewünschte Konditionierungstemperatur erwärmen, bei der sich das Material des Vorformlings 3 vor oder während des Umformens gezielt konditionieren lässt, beispielweise zum Beeinflussen der Kristallisation im Kunststoff.

Alternativ oder anteilig könnten der Überdruck und/oder die Temperatur eines inkompressiblen Formfluids zentral für mehrere Behandlungsstationen 5 oder in den jeweiligen Zuleitungen eingestellt werden. Wie nachfolgend noch erläutert wird, wäre es denkbar, an jeder Behandlungsstation 5 mehrere Zuleitungen für kompressible und/oder inkompressible Formfluide bei unterschiedlichen Druckniveaus und/oder Temperaturniveaus vorzuhalten und das jeweilige Formfluid beim Ausformen des Behälters 2 selektiv aus diesen Zuleitungen zuzuschalten.

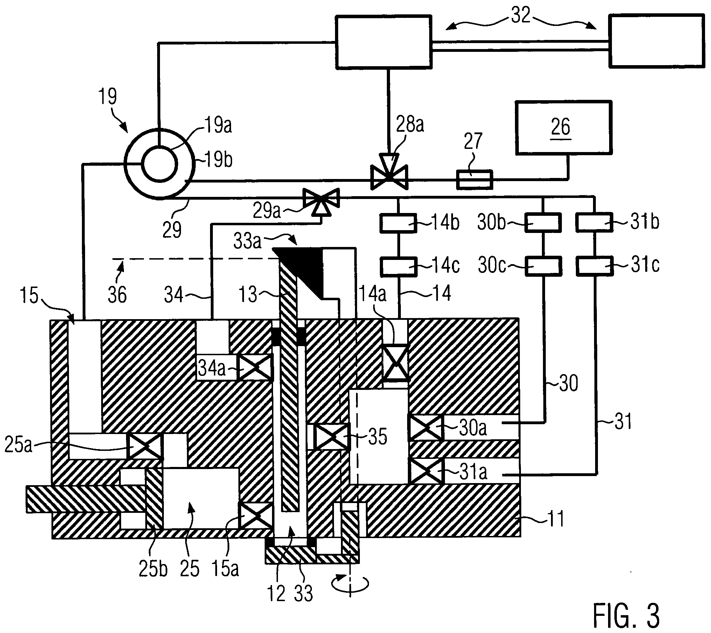

Die Fig. 3 zeigt schematisch ein Fließschema zur Medienführung von Produkt, Formfluid und CIP-Medium, das für ein CIP (Cleaning-In-Place) ausgebildet ist und Entkeimungsmittel oder dergleichen umfassen kann. Demnach umfasst der als Drehverteiler ausgebildete Medienverteiler 19 beispielsweise eine erste Spur 19a für Produkt und eine zweite Spur 19b für ein kompressibles Formfluid, wie beispielsweise Blasluft oder CO₂.

Das Produkt wird im Produktionsbetrieb über die Zuleitung 15 in den Ventilkopf 11 geführt und kann durch Öffnen des Ventils 15a gesteuert durch die Fluiddüse 12 in einen zu füllenden Behälter 12 geleitet werden. Dazwischen geschaltet ist ein Kompressor 25 mit einem Ventil 25a und einem Kolben 25b, um das Produkt mit einem geeigneten Fülldruck durch die Fluiddüse 12 in den Behälter 2 zu drücken.

Das kompressible Formfluid wird im Produktionsbetrieb von einem zentralen Kompressor 26 über einen Filter 27, eine Leitung 28 und ein darin ausgebildetes Dreiwegeventil 28a in die zweite Spur 19b eingespeist. Aus dieser wird das kompressible Formfluid durch eine Leitung 29 und ein darin ausgebildetes Dreiwegeventil 29a parallel auf Leitungen 30, 31 und 14 zum Vorblasen bei etwa 3-20 bar, zum Zwischenblasen bei etwa 5-30 bar und zum Fertigblasen bei 7-40 bar verteilt. Zum gesteuerten Zuschalten der einzelnen Druckstufen sind in den Leitungen Ventile 30a, 31a, 14a vorhanden. Schematisch angedeutet sind ferner zugehörige Druckminderer 30b, 31b, 14b sowie Ringleitungen 30c, 31c und 14c.

Eine Versorgungseinheit 32 zur Lagerung und Aufbereitung des Produkts, beispielsweise durch Mischen, Entgasen oder dergleichen ist ebenso schematisch angedeutet.

Bei der Reinigung und/oder Entkeimung von Produkt führenden Komponenten strömt ein CIP-Medium aus der Versorgungseinheit 32 durch die erste Spur 19a in die Produktleitung 15, durch den Kompressor 25 und die Fluiddüse 12. Das CIP-Medium wird mittels einer CIP-Abdeckkappe 33 für die Fluiddüse 12 weitergeleitet und gelangt durch eine CIP-Rückführleitung 34, das Dreiwegeventil 29a und die Leitung 29 in die zweite Spur 19b. Von dort wird das CIP-Medium vorzugsweise über die Leitung 28 und das Dreiwegeventil 28a zurück zur Versorgungseinheit 32 geführt.

Die CIP-Rückführleitung 34 lässt sich für den Produktionsbetrieb mit einem Ventil 34a verschließen. Umgekehrt wird die Fluiddüse 12 beim Reinigen und/oder Entkeimen mit einem Absperrventil 35 von den Leitungen und Ventilen für das Formfluid getrennt. Dadurch wird verhindert, dass aggressive CIP-Reinigungsmedien pneumatische Ventile, Druckminderer oder dergleichen angreifen können.

Um die CIP-Kappe 33 vor der Fluiddüse 12 abdichtend zu platzieren, ist diese an einem Betätigungsmechanismus 33a vorzugsweise in einer horizontalen Ebene schwenkbar gelagert. Der Betätigungsmechanismus 33a umfasst beispielsweise einen Mitnehmer, der einen Hub der Reckstange 13 in eine Schwenkbewegung / Drehbewegung des Betätigungsmechanismus 33a um eine vertikale Achse umsetzt. Hierzu fährt die Reckstange 13 vorzugsweise in eine obere Betätigungsposition 36, die oberhalb des Arbeitsbereichs der Reckstange 13 im normalen Produktionsbetrieb liegt. Dies ist in der Fig. 3 lediglich schematisch angedeutet. An der Betätigungsposition 36 löst die Reckstange 13 eine Schwenkbewegung der CIP-Abdeckkappe 33 bis vor die Fluiddüse 12 aus, um diese im Reinigungsbetrieb nach unten abzudichten.

Die Reckstangen 13 könnten mit separaten Elektromotoren angetrieben sein, beispielsweise mittels Kugelgewindespindel oder in Form von Linearmotoren. Damit ließe sich die Betätigungsposition 36 einzeln anfahren. Erfindungsgemäß ist daher ein eigener Antrieb zum Schwenken der CIP-Abdeckkappe 33 entbehrlich, insbesondere eine separate Kurvensteuerung, die gegebenenfalls in einem Reinraumbereich ausgebildet werden müsste.

Nachfolgend sind weitere Varianten der erfindungsgemäßen Führung von CIP-Reinigungsmedium schematisch dargestellt, wobei Bezugszeichen für funktionell gleichwertige Elemente beibehalten und daher nicht nochmals erklärt werden.

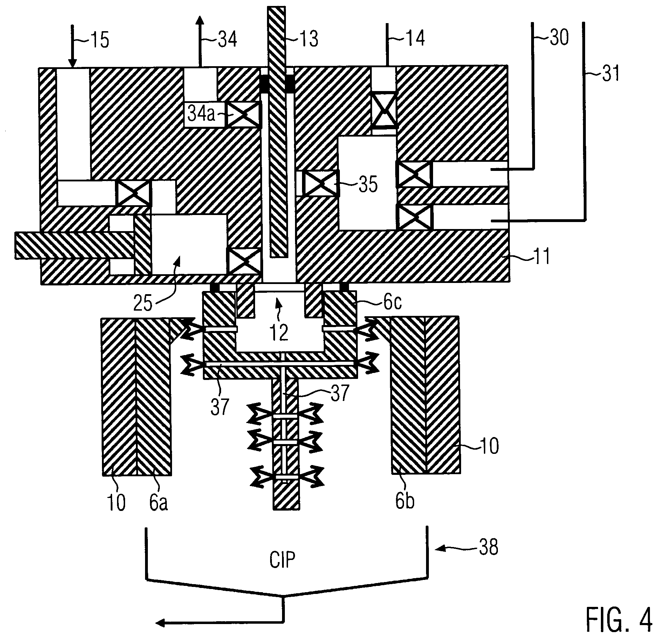

Gemäß Fig. 4 wird der untere Formteil 6c der Hohlform 6 über seine Arbeitsposition beim Ausformen des Behälters 2 hinaus angehoben und als CIP-Abdeckkappe für die Fluiddüse 12 verwendet. Durch Pfeile symbolisiertes CIP-Medium kann demnach durch den Ventilkopf 11 und die separate CIP-Rückführleitung 34 und/oder durch im unteren Formteil 6c ausgebildete Kanäle 37 zurückgeleitet werden. Das CIP-Medium könnte unterhalb der Behandlungsstationen 5 in einer gemeinsamen Auffangwanne 38 oder dergleichen gesammelt und zur zweiten Spur 19b oder dergleichen geleitet werden. Die Medienversorgung kann generell entsprechend der Fig. 3 erfolgen.

Ferner wäre es denkbar, die unteren Formteile 6c jeweils mit einem eigenen Antrieb auszubilden, insbesondere mittels Elektromotor, oder die unteren Formteile 6c durch eine gemeinsame Steuerkurve zu heben. In letzterem Fall könnte das untere Formteil 6c in einer oberen Position an der Fluiddüse 12 abdichtend einrasten.

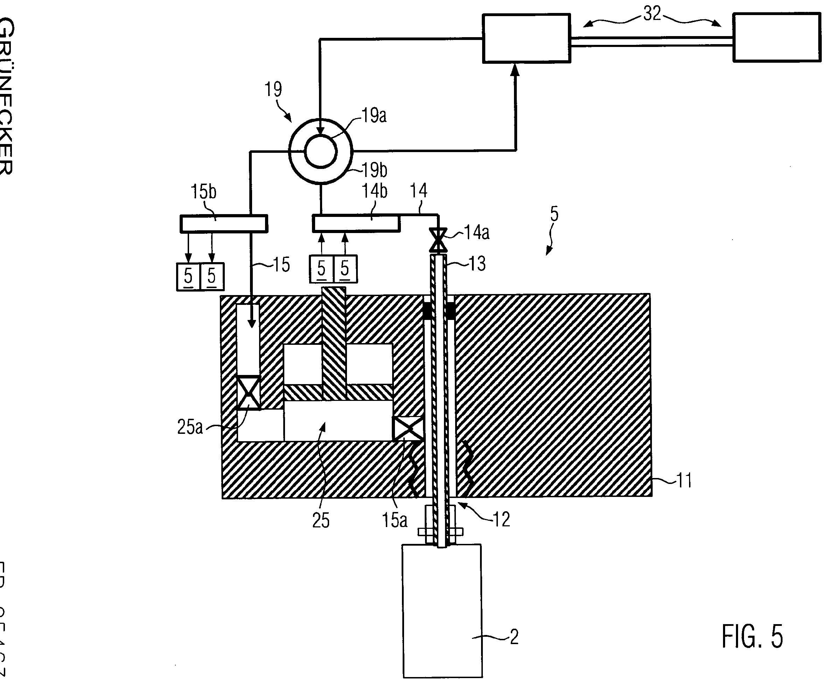

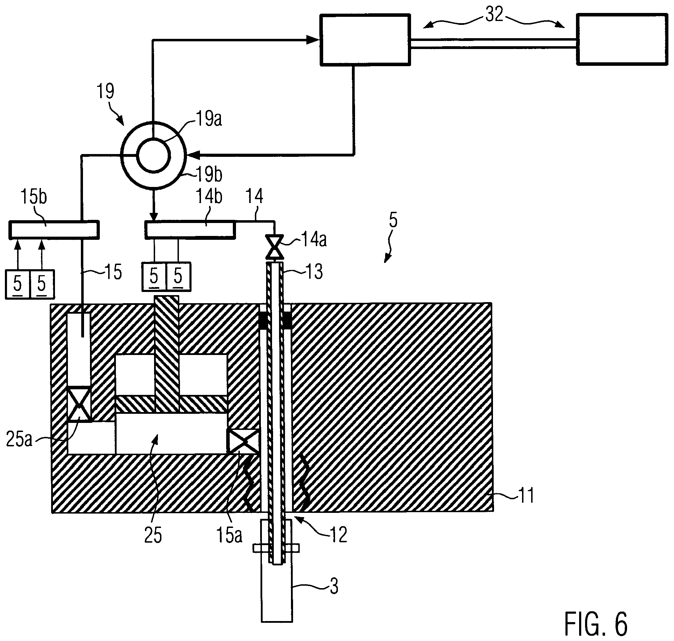

Gemäß Fig. 5 und 6 werden erfindungsgemäß bei der Reinigung mit CIP-Medium, wie beispielsweise Lauge, Säure oder Wasser, auch Leitungen für Formfluid, wie beispielsweise Blasluft, Wasser und/oder Produktkomponenten einbezogen, also Leitungen, die im Produktionsbetrieb dem Umformen der Vorformlinge 3 zu Behältern 2 zugeordnet sind.

Insbesondere wird der Medienverteiler 19, der bei herkömmlichen Füllmaschinene eine separate Spur für die Rückführung von CIP-Medium benötigt erfindungsgemäß im Produktionsbetrieb und im Reinigungsbetrieb unterschiedlich angeschlossen. Dadurch wird eine separate Spur zur CIP-Rückführung entbehrlich. Dies reduziert nicht nur den apparativen Aufwand sondern ermöglicht eine abschnittsweise CIP-Reinigung von Leitungen für Formfluide.

Gemäß Fig. 5 wird ein Behälter 2 als CIP-Kappe für die Fluiddüse 12 verwendet, gemäß Fig. 6 dagegen ein Vorformling 3. Vorformlinge 3 als CIP-Kappe reduzieren den CIP-Medienverbrauch, Behälter 2 ermöglichen ein tieferes Eintauchen der Reckstange 13, um diese zumindest teilweise mit zu reinigen. In der Fig. 5 wird CIP-Medium durch die Zuleitung 15 in Fließrichtung des Produkts in den Ventilkopf 11 eingeleitet und durch die Reckstange 13 und die daran angeschlossene Zuleitung 14 für Formfluid, wie beispielsweise Blasluft, zum Medienverteiler 19 zurück geführt. Die Fig. 6 verdeutlicht, dass die Fließrichtung des CIP-Mediums (siehe Pfeile) auch umgekehrt sein kann, also entgegen der normalen Fließrichtung des Produkts. Bevorzugt ist ein CIP-Prozess mit Rückführung des CIP-Mediums durch die Zuleitung 14 für Blasluft oder dergleichen.

Als CIP-Kappe verwendete Vorformlinge 3 und Behälter 2 laufen im Reinigungsbetrieb kontinuierlich um und werden nicht an den Auslaufstern 9 übergeben sondern nach dem CIP-Prozess ausgeleitet. Allerdings wären separate CIP-Kappen 33 an den Ventilköpfen 11 ebenso einsetzbar.

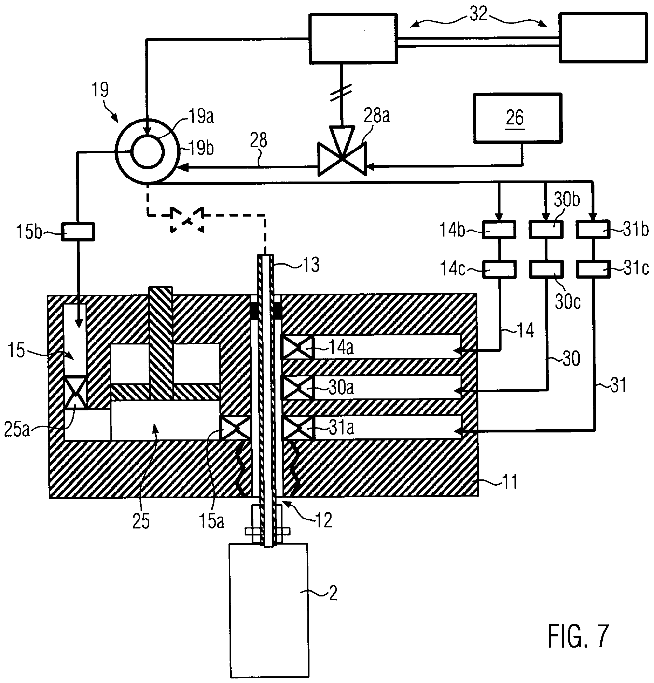

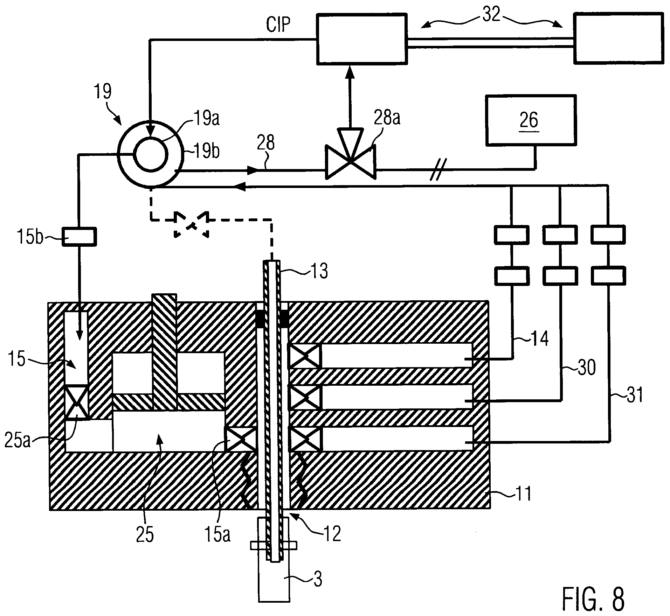

Die Fig. 7 zeigt eine erfindungsgemäße Konfiguration zum Vorblasen eines Behälters 2 mit CO₂ oder Luft und zum Füllen und/oder Fertigblasen mit Produkt im normalen Produktionsbetrieb, die Fig. 8 zeigt die gleiche Anlagenkonfiguration im CIP-Prozess. Demnach schließt das Dreiwegeventil 28a im Produktionsbetrieb die Verbindung mit dem Bypass zur Versorgungseinheit 32, die im CIP-Prozess geöffnet wird. Entsprechend wir dann die Verbindung zum Kompressor 26 am Dreiwegeventil 28a geschlossen. Auch hier dient zur Leitung des CIP-Mediums eine Spur 19b des Medienverteilers 19, die im Produktionsbetrieb für Formfluid verwendet wird.

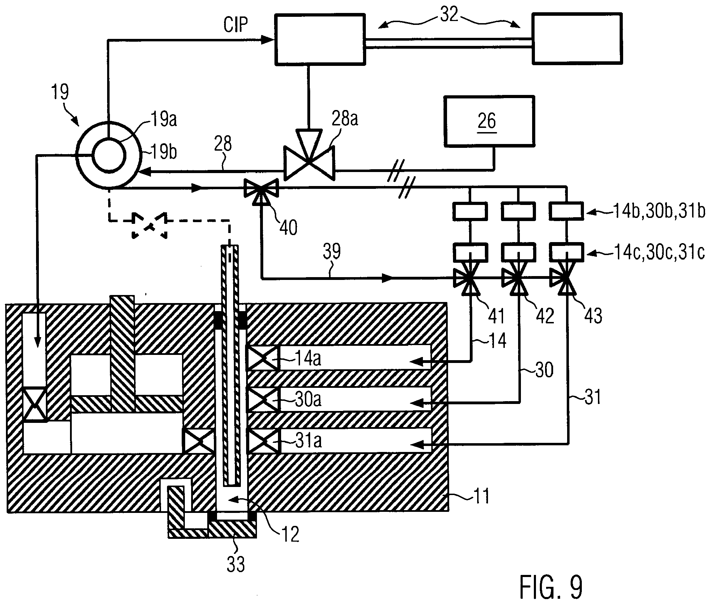

Die Fig. 9 unterscheidet sich von der Fig. 8 nur durch die Verwendung einer separaten CIP-Abdeckkappe 33 für die Fluiddüse 12 und durch eine Bypass-Leitung 39 zum Umgehen der Druckminderer 14b, 30b, 31b und der Ringleitungen 14c, 30c, 31c. Hierzu sind zusätzliche Dreiwegeventile 40-43 vorhanden. Dies ermöglicht das Einbeziehen der im Produktionsbetrieb für Formfluid verwendeten Leitungen 14, 30, 31 auch mit aggressiven CIP-Medien, die den Druckminderern 14b, 30b, 31b schaden könnten.

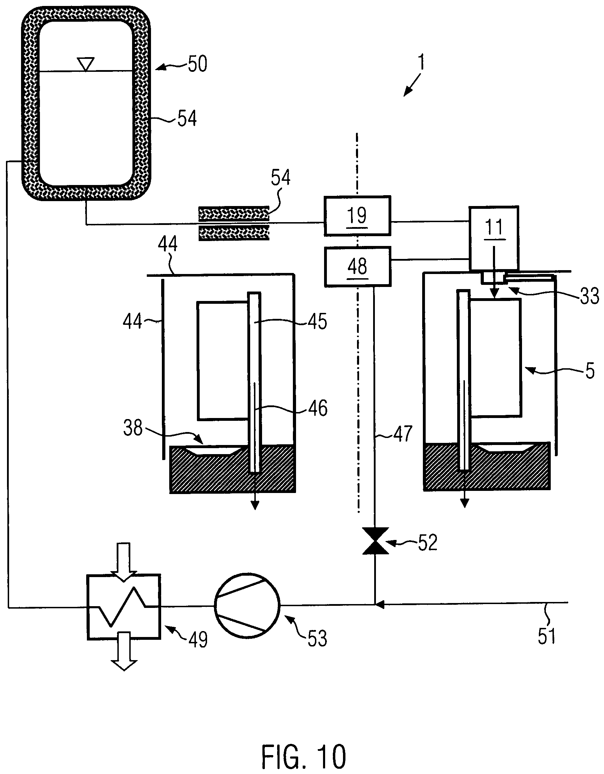

Die Fig. 10 zeigt eine weitere erfindungsgemäße Ausgestaltung der Formfüllmaschine 1, bei der weitere zur Ausformung der Behälter 2 verwendete Strukturen zusätzlich zur Führung von CIP-Medien eingesetzt werden.

Demnach wird beispielsweise eine Reinraum-Einhausung 44 um die Behandlungsstationen 5 zum Auffangen und Sammeln von CIP-Medium verwendet. CIP-Medium lässt sich ferner durch einen in der Hauptwelle 45 der Behandlungsstationen 5 vorhandenen Kanal 46 leiten, insbesondere zurück führen.

Zu diesem Zweck kann ebenso ein Heißhaltekanal 47 für das Produkt im CIP-Betrieb verwendet werden. Zweckmäßig wird eine CIP-Kappe 33 eingeschwenkt und das CIP-Medium über eine bereits vorhandene Drehdurchführung 48 eine bestimmte Zeit über einen Wärmetauscher 49 und einem Produktvorlagebehälter 50 solange im Kreis gefahren, bis die Produktwege ausreichend gereinigt sind.

Bei Produktionsunterbrechung kann der Heißhaltekanal 47 genutzt werden, um das Produkt und produktberührte Bauteile, wie den Ventilkopf 11 mit dem Fluidventil 12 (funktional entsprechend einem Blas-Füllventil) auf Temperatur zu halten. Somit kann bei Produktionsstart und beim Anfahren aus Produktionsunterbrechung sichergestellt werden, dass bereits die ersten Behälter mit hinreichender Qualität produziert werden können.

Weitere in der Fig. 10 zum besseren Verständnis dargestellte Elemente sind eine Produktzuführleitung 51, ein Ventil 52, eine Pumpe 53 und eine thermische Isolierung 54.

Die erfindungsgemäße Formfüllmaschine und die beschriebenen CIP-Prozesse ließen sich beliebig im Rahmen der beschriebenen Ausführungsformen auf technisch sinnvolle Weise modifizieren und/oder kombinieren.

## Patentansprüche

1. Formfüllmaschine (1) mit mehreren Behandlungsstationen (5), die zum Ausformen von Behältern (2) in Hohlformen (6) durch selektives Einleiten eines Formfluids unter Überdruck in Vorformlinge (3) ausgebildet sind, und die zum Füllen der Behälter in der Hohlform durch selektives Einleiten eines Produkts durch wenigstens eine Zuleitung (15) und eine Fluiddüse (12) ausgebildet sind, wobei sich wenigstens ein strukturelles Element (33, 6b, 6c), das eine Funktion beim Ausformen der Behälter hat, zuschalten und/oder bewegen lässt, um ein CIP-Medium unter Durchströmen der Zuleitung (15) und der Fluiddüse (12) weiter zu leiten.

2. Formfüllmaschine nach Anspruch 1, wobei das strukturelle Element ein unteres Formteil (6c) der Hohlform (6) ist, das sich abdichtend gegen die Fluiddüse (12) fahren lässt.

3. Formfüllmaschine nach Anspruch 2, wobei im unteren Formteil (6c) Spülkanäle (37) ausgebildet sind, durch die das CIP-Medium insbesondere in seitlicher Richtung ausgeleitet werden kann.

4. Formfüllmaschine nach Anspruch 3, wobei unterhalb des unteren Formteils (6c) eine Auffangwanne (38) für das CIP-Medium ausgebildet ist.

5. Formfüllmaschine nach Anspruch 1, wobei das strukturelle Element eine an der Behandlungsstation (5) ausgebildete Reckstange (13) ist, die sich nach oben gegen einen Umlenkmechanismus (33a) fahren lässt, um eine CIP-Kappe (33) vor die Fluiddüse (12) zu schwenken.

6. Formfüllmaschine nach wenigstens einem der vorigen Ansprüche, wobei das strukturelle Element eine zur Fluidleitung rohrförmig ausgebildete Reckstange (13) ist.

7. Formfüllmaschine nach wenigstens einem der vorigen Ansprüche, wobei das strukturelle Element wenigstens eine Zuleitung (14, 30, 31) für ein kompressibles Formfluid ist, die sich selektiv schaltbar in einen Kreislauf für das CIP-Medium einbeziehen lässt.

8. Formfüllmaschine nach Anspruch 7, ferner mit einem schaltbaren Bypass (39) zur Umgehung wenigstens eines in der Zuleitung (14, 30, 31) des kompressiblen Fluids ausgebildeten Druckminderers.

9. Formfüllmaschine nach wenigstens einem der vorigen Ansprüche, wobei das strukturelle Element wenigstens eine Spur (19a, 19b) eines an der Formfüllmaschine (1) ausgebildeten zentralen Medienverteilers (19) ist, die sich vom Leiten des Formfluids im Produktionsbetrieb auf Leiten des CIP-Mediums umschalten lässt.

10. Formfüllmaschine nach wenigstens einem der vorigen Ansprüche, wobei das strukturelle Element eine zur Fluidleitung rohrförmig ausgebildete Hauptwelle (45) der Behandlungsstation (5) und/oder ein Heißhaltekanal (47) für das Produkt ist.

11. Formfüllmaschine nach wenigstens einem der vorigen Ansprüche, wobei das strukturelle Element eine gemeinsame Reinraum-Einhausung (44) für die Behandlungsstationen (5) ist.

12. Formfüllmaschine nach wenigstens einem der vorigen Ansprüche, wobei die Behandlungsstationen (5) Ventilköpfe (11) mit einem Absperrventil (35) umfassen, das zwischen der Fluiddüse (12) und wenigstens einer Zuleitung (14, 30, 31) für ein kompressibles Formfluid ausgebildet ist.

13. Verfahren zur Reinigung einer Formfüllmaschine (1) mit mehreren Behandlungsstationen, (5) die zum Ausformen von Behältern (2) in Hohlformen (6) durch selektives Einleiten eines Formfluids unter Überdruck in Vorformlinge (3) ausgebildet sind, und die zum Füllen der Behälter in der Hohlform durch selektives Einleiten eines Produkts durch wenigstens eine Zuleitung (15) und eine Fluiddüse (12) ausgebildet sind, wobei ein durch die Zuleitung (15) und die Fluiddüse (12) strömendes CIP-Medium durch Zuschalten und/oder Bewegen eines strukturellen Elements (33, 6b, 6c), das eine Funktion beim Ausformen der Behälter hat, weiter und/oder zurück geleitet wird, insbesondere bei umlaufender Behandlungsstation.

14. Verfahren nach Anspruch 13, wobei ein Vorformling (3) oder ein Behälter (2) als CIP-Kappe gegen die Fluiddüse (12) gefahren wird.

15. Verfahren nach Anspruch 13 oder 14, wobei das CIP-Medium durch eine für ein kompressibles Formfluid zum Ausformen der Behälter (2) vorgesehene Verteilerspur (19a, 19b) eines an der Formfüllmaschine (1) ausgebildeten Drehverteilers geleitet wird.

## Claims

1. Blow moulding and filling machine (1) comprising a plurality of treatment stations (5) which are designed for moulding containers (2) in hollow moulds (6) by selective introduction of a moulding fluid under overpressure into preforms (3), and which are designed for filling the containers in the hollow mould by selective introduction of a product through at least one feed line (15) and a fluid nozzle (12), wherein at least one structural element (33, 6b, 6c) that has a function during moulding of the containers can be connected and/or moved in order to pass on a CIP medium while flowing through the feed line (15) and the fluid nozzle (12).

2. Blow moulding and filling machine according to claim 1, wherein the structural element is a lower mould part (6c) of the hollow mould (6) which can be sealingly moved against the fluid nozzle (12).

3. Blow moulding and filling machine according to claim 2, wherein the lower mould part (6c) has formed therein flushing channels (37) through which the CIP medium can be discharged particularly in lateral direction.

4. Blow moulding and filling machine according to claim 3, wherein a collection tray (38) for the CIP medium is formed underneath the lower mould part (6c).

5. Blow moulding and filling machine according to claim 1, wherein the structural element is a stretch rod (13) which is formed at the treatment station (5) and which can be moved upwards against a deflection mechanism (33a) to pivot a CIP cap (33) in front of the fluid nozzle (12).

6. Blow moulding and filling machine according to at least one of the previous claims, wherein the structural element is a stretch rod (13) which is made tubular for fluid conduction.

7. Blow moulding and filling machine according to at least one of the previous claims, wherein the structural element is at least a feed line (14, 30, 31) for a compressible moulding fluid which can be incorporated selectively switchably into a circuit for the CIP medium.

8. Blow moulding and filling machine according to claim 7, further comprising a switchable bypass (39) for bypassing at least one pressure reducer formed in the feed line (14, 30, 31) of the compressible fluid.

9. Blow moulding and filling machine according to at least one of the previous claims, wherein - the structural element is at least a track (19a, 19b) of a central media distributor (19) formed on the blow moulding and filling machine (1), which track can be switched from conducting the moulding fluid in the production mode to conducting the CIP medium.

10. Blow moulding and filling machine according to at least one of the previous claims, wherein the structural element is a main shaft (45) of the treatment station (5), which is made tubular for fluid conduction, and/or a heat keeping channel (47) for the product.

11. Blow moulding and filling machine according to at least one of the previous claims, wherein the structural element is a common clean-room casing (44) for the treatment stations (5).

12. Blow moulding and filling machine according to at least one of the previous claims, wherein the treatment stations (5) comprise valve heads (11) with a shut-off valve (35) which is formed between the fluid nozzle (12) and at least one feed line (14, 30, 31) for a compressible moulding fluid.

13. Method for cleaning a blow moulding and filling machine (1) having a plurality of treatment stations (5) which are designed for moulding containers (2) in hollow moulds (6) by selective introduction of a moulding fluid under overpressure into preforms (3), and which are designed for filling the containers in the hollow mould by selective introduction of a product through at least one feed line (15) and a fluid nozzle (12), wherein a CIP medium flowing through the feed line (15) and the fluid nozzle (12) is passed on and/or returned by connecting and/or moving a structural element (33, 6b, 6c) which has a function during moulding of the container, in particular in a rotary treatment station.

14. Method according to claim 13, wherein a preform (3) or a container (2) is moved as a CIP cap against the fluid nozzle (12).

15. Method according to claim 13 or 14, wherein the CIP medium is passed by a distributor track (19a, 19b) of a rotary distributor formed on the blow moulding and filling machine (1), said distributor track (19a, 19b) being provided for a compressible moulding fluid for moulding the containers (2).

## Revendications

1. Machine de formage et de remplissage (1) comprenant plusieurs postes de traitement (5), qui sont configurés pour assurer le moulage par formage de contenants (2) dans des moules creux (6), par introduction sélective d'un fluide de formage sous pression dans des préformes (3), et qui sont configurés pour remplir les contenants dans le moule creux par introduction sélective d'un produit par l'intermédiaire d'au moins une conduite d'amenée (15) et d'une buse de fluide (12), machine
dans laquelle au moins un élément structurel (33, 6b, 6c), qui assure une fonction lors du formage des contenants, peut être mis en fonction et/ou déplacé pour assurer la poursuite de l'acheminement d'un agent de nettoyage en place dit agent NEP (de nettoyage en place) ou CIP (de Cleaning In Place) par écoulement à travers la conduite d'amenée (15) et la buse de fluide (12).

2. Machine de formage et de remplissage selon la revendication 1, dans laquelle l'élément structurel est une partie inférieure de moule (6c) du moule creux (6), qui peut être déplacée de manière étanche contre la buse de fluide (12).

3. Machine de formage et de remplissage selon la revendication 2, dans laquelle dans la partie inférieure de moule (6c) sont formés des canaux de rinçage (37) par lesquels peut être évacué l'agent CIP, notamment en direction latérale.

4. Machine de formage et de remplissage selon la revendication 3, dans laquelle sous la partie inférieure de moule (6c) est réalisé un bac de collecte (38) pour l'agent CIP.

5. Machine de formage et de remplissage selon la revendication 1, dans laquelle l'élément structurel est une tige d'étirage (13) formée dans le poste de traitement (5), qui peut être déplacée vers le haut contre un mécanisme de déviation (33a), pour faire pivoter un capuchon CIP (33) devant la buse de fluide (12).

6. Machine de formage et de remplissage selon l'une au moins des revendications précédentes, dans laquelle l'élément structurel est une tige d'étirage (13) configurée de manière tubulaire en conduite de fluide.

7. Machine de formage et de remplissage selon l'une au moins des revendications précédentes, dans laquelle l'élément structurel est au moins une conduite d'amenée (14, 30, 31) pour un fluide de formage compressible, qui peut être intégrée, par commutation sélective, dans un circuit pour l'agent CIP.

8. Machine de formage et de remplissage selon la revendication 7, comprenant, en outre, une dérivation (39) commutable pour contourner au moins un réducteur de pression réalisé dans la conduite d'amenée (14, 30, 31) du fluide compressible.

9. Machine de formage et de remplissage selon l'une au moins des revendications précédentes, dans laquelle l'élément structurel est au moins une voie (19a, 19b) d'un distributeur d'agent (19) centralisé réalisé dans la machine de formage et de remplissage (1), qui peut être convertie de la fonction d'acheminement du fluide de formage à la fonction de d'acheminement d'agent CIP.

10. Machine de formage et de remplissage selon l'une au moins des revendications précédentes, dans laquelle l'élément structurel est un arbre principal (45) du poste de traitement (5) et/ou un canal de maintien à chaud (47) pour le produit, configurés de manière tubulaire en conduite de fluide.

11. Machine de formage et de remplissage selon l'une au moins des revendications précédentes, dans laquelle l'élément structurel est un capotage de chambre stérile (44) commun, pour les postes de traitement (5).

12. Machine de formage et de remplissage selon l'une au moins des revendications précédentes, dans laquelle les postes de traitement (5) comportent des têtes de vannes (11) avec une vanne d'arrêt (35), qui est réalisée entre la buse de fluide (12) et au moins une conduite d'amenée (14, 30, 31) pour un fluide de formage compressible.

13. Procédé de nettoyage d'une machine de formage et de remplissage (1) comprenant plusieurs postes de traitement (5), qui sont configurés pour assurer le moulage par formage de contenants (2) dans des moules creux (6), par introduction sélective d'un fluide de formage sous pression dans des préformes (3), et qui sont configurés pour remplir les contenants dans le moule creux par introduction sélective d'un produit par l'intermédiaire d'au moins une conduite d'amenée (15) et d'une buse de fluide (12), procédé
d'après lequel un agent CIP s'écoulant à travers la conduite d'amenée (15) et la buse de fluide (12), est acheminé plus loin et/ou en retour, par la mise en fonction et/ou le déplacement d'un élément structurel (33, 6b, 6c), qui assure une fonction lors du formage des contenants, notamment lors de la révolution du poste de traitement.

14. Procédé selon la revendication 13, d'après lequel une préforme (3) ou un contenant (2) est déplacé, en tant que capuchon CIP, contre la buse de fluide (12).

15. Procédé selon la revendication 13 ou la revendication 14, d'après lequel l'agent CIP est acheminé à travers une voie de distributeur (19a, 19b) d'un distributeur rotatif réalisé dans la machine de formage et de remplissage (1), prévue pour un fluide de formage compressible destiné à assurer le formage des contenants (2).
